# EUROPÄISCHE PATENTSCHRIFT

(11) **EP 4 040 721 B1**
(45) Veröffentlichungstag und Bekanntmachung des Hinweises auf die Patenterteilung: **19.02.2025**
(21) Anmeldenummer: 22153660.0
(22) Anmeldetag: 27.01.2022
(51) Int. Cl.: H04L 9/40, H04W 76/12, H04W 88/16, H04W 92/02

(54) **VERFAHREN ZUM BEREITSTELLEN EINER DATENVERBINDUNG ZUM INTERNET AN EINEM TELEKOMMUNIKATIONS-ENDGERÄT SOWIE SERVERSYSTEM**
METHOD FOR PROVIDING A DATA LINK TO THE INTERNET AT A TELECOMMUNICATIONS TERMINAL AND SERVER SYSTEM
PROCÉDÉ DE FOURNITURE D'UNE CONNEXION DE DONNÉES À INTERNET AU NIVEAU D'UN TERMINAL DE TÉLÉCOMMUNICATION, AINSI QUE SYSTÈME SERVEUR

(30) Priorität: 03.02.2021 DE 102021102446
(43) Veröffentlichungstag der Anmeldung: 10.08.2022
(73) Patentinhaber: LinkXess GmbH, 12489 Berlin (DE)
(72) Erfinder: PAETSCH, Frank, 12489 Berlin (DE)
(74) Vertreter: Müller, Wolfram Hubertus

(56) Entgegenhaltungen:
- EP-A1- 3 310 018
- EP-A2- 2 557 854
- DE-A1- 102011 007 814
- US-A1- 2006 126 645

## Beschreibung

Es ist bekannt, dass ein Mobilfunk-Endgerät einen Zugang zum Internet über das "eigene" Mobilfunknetz bzw. Heimat-Mobilfunknetz herstellt, dem die SIM-Karte des Mobilfunk-Endgeräts zugeordnet ist. Dies kann unter Verwendung unterschiedlicher Technologien wie 3G, 4G und 5G erfolgen. Wenn sich ein Mobilfunk-Endgerät nicht im Empfangsbereich des Heimat-Mobilfunknetzes befindet, beispielsweise weil sich das Mobilfunk-Endgerät im Ausland befindet, ist das direkte Einwählen in das Heimat-Mobilfunknetz jedoch nicht möglich. Dies ist mit dem Nachteil einer Reduzierung der dem Mobilfunk-Endgerät zur Verfügung stehenden Dienste verbunden, da einige Dienste national gebunden sind und auch bei einem Roaming nicht vom Ausland aus in Anspruch genommen werden können. Solche national gebundenen Dienste, die aus dem Ausland nicht in Anspruch genommen werden können, betreffen beispielsweise das Einbuchen bei einer Bank oder das Nutzen bestimmter Accounts wie zum Beispiel eines nationalen Twitter-Kontos.

In ähnlicher Weise kann sich auch für ein TK-Endgerät, dass kein Mobilfunk-Endgerät ist, das Problem stellen, sich in einem anderen Land in effektiver Weise in das Internet einwählen und Dienste in Anspruch nehmen zu können.

Aus der EP 2 700 281 B1 ist ein Verfahren zum Leiten von Telekommunikationsverbindungen zu einem Mobilfunk-Endgerät, das sich nicht im Empfangsbereich seines Heimatsnetzes befindet, bekannt. Dabei ist vorgesehen, dass SIM-Informationsdaten einer SIM-Karte des Mobilfunk-Endgeräts via Datenübertragung zu einem Mobilfunk-Gateway übertragen werden, welches sich dann unter Verwendung dieser SIM-Informationsdaten an dem Standort des Mobilfunk-Gateways im Mobilfunk-Heimatsnetz des Mobilfunk-Endgerätes einbucht. Eine an die Rufnummer des Mobilfunk-Endgerät gerichtete Telekommunikationsverbindung wird vom Mobilfunk-Gateway an das Mobilfunk-Endgerät weitergeleitet.

Die DE 10 2011 007 814 A1 offenbart ein Verfahren zum Leiten von Telekommunikationsverbindungen zu einem Mobilfunk-Endgerät, das sich nicht im Empfangsbereich seines Heimatnetzes befindet, wobei das Mobilfunk-Endgerät eine dem Heimatnetz zugeordnete SIM-Karte mit SIM-Informationsdaten aufweist und der SIM-Karte eine erste Rufnummer zugeordnet ist. Ausgelöst durch ein Ereignis wird automatisch im Mobilfunk-Endgerät oder einem diesem zugeordneten Gerät eine Nachricht erzeugt, die zumindest die SIM-Informationsdaten der SIM-Karte oder eine Information, die die SIM-Karte identifiziert, aufweist. Die Nachricht wird von dem Mobilfunk-Endgerät oder dem mit dem Mobilfunk-Endgerät verbundenen Gerät direkt oder indirekt an ein Mobilfunk-Gateway versandt. Es werden Zuordnungsinformationen am Mobilfunk-Gateway bereitgestellt, die den Absender der Nachricht identifizieren. Nach der Erhalt der Nachricht am Mobilfunk-Gateway bucht sich ein Modul des Mobilfunk-Gateways am Standort des Mobilfunk-Gateways im Heimatnetz unter Verwendung der erhaltenen SIM-Informationsdaten oder unter Verwendung einer Partner-SIM-Karte ein, so dass jede an die erste Rufnummer gerichtete TK-Verbindung an das Mobilfunk-Gateway geleitet wird. Eine solche TK-Verbindung wird vom Mobilfunk-Gateway an den Absender unter Verwendung der Zuordnungsinformationen weiter geleitet.

Aus der US 2006/0126645 A1 ist ein Verfahren bekannt, bei dem ein Endgerät eine Datenverbindung über einen Router aufbaut, wenn es sich außerhalb seines Heimatsnetzes aufhält. Der Router verbindet eine erste gesicherte Datenverbindung zwischen einem dem Endgerät zugeordneten Heimatagenten und dem Router und eine zweite gesicherte Datenverbindung.

Der vorliegenden Erfindung liegt die Aufgabe zu Grunde, ein effektives Verfahren zum Bereitstellen einer Datenverbindung zum Internet an einem TK-Endgerät sowie ein Serversystem zur Verfügung zu stellen, die es einem TK-Endgerät ermöglichen, eine Verbindung zum Internet über ein bestimmtes Mobilfunknetz bereitzustellen.

Diese Aufgabe wird erfindungsgemäß durch ein Verfahren mit den Merkmalen des Anspruchs 1 und ein Serversystem mit den Merkmalen des Anspruchs 11 gelöst. Ausgestaltungen der Erfindung sind in den abhängigen Ansprüchen angegeben.

Danach betrachtet die vorliegende Erfindung in einem ersten Erfindungsaspekt ein Verfahren zum Bereitstellen einer Datenverbindung zum Internet an einem TK-Endgerät unter Verwendung eines Mobilfunknetzes. Das Mobilfunknetz kann das Mobilfunknetz sein, dem eine nachfolgend betrachtete SIM-Karte zugeordnet ist (für welchen Fall das Mobilfunknetz als Heimat-Mobilfunknetz bezeichnet wird) oder alternativ irgendein anderes Mobilfunknetz sein. In letzterem Fall handelt es sich insbesondere um ein Mobilfunknetz eines anderen Landes, das sich von dem Land unterscheidet, in dem das Heimat-Mobilfunknetz der SIM-Karte realisiert ist.

Das Verfahren sieht vor, dass einem betrachteten TK-Endgerät eine SIM-Karte zugeordnet wird. Eine solche Zuordnung einer SIM-Karte kann beispielsweise durch den Nutzer des TK-Endgeräts oder durch einen Server erfolgen. Die Zuordnung kann manuell oder automatisch ausgelöst werden. In jedem Fall wird die Zuordnung an dem Server erfasst, so dass der Server Kenntnis davon hat, dass eine betrachtete SIM-Karte dem TK betrachteten Endgerät zugeordnet ist.

In einem nachfolgenden Schritt wird die dem TK-Endgerät zugeordnete SIM-Karte einem Mobilfunk-Gateway bereitgestellt. Dies erfolgt, indem die SIM-Karte dem Mobilfunk-Gateway von dem Server oder einem mit dem Server kommunizierenden gesonderten SIM-Server bereitgestellt wird, wie noch ausgeführt wird. In diesem Zusammenhang wird darauf hingewiesen, dass eine SIM-Karte im Sinne der vorliegenden Erfindung eine physische SIM-Karte oder eine eSIM (elektronische SIM) sein kann. Das Bereitstellen einer SIM-Karte im Sinne der vorliegenden Erfindung bedeutet, dass SIM-Informationsdaten bereitgestellt werden, die ein Einbuchen der SIM-Karte im Mobilfunknetz ermöglichen. Wenn somit dem Mobilfunk-Gateway die SIM-Karte bereitgestellt wird, so bedeutet dies nicht ein physisches Bereitstellen einer SIM-Karte, sondern die Bereitstellung von elektronischen SIM-Informationsdaten, die ein Einbuchen im Mobilfunknetz ermöglichen. Eine SIM-Karte umfasst als SIM-Informationsdaten in der Regel eine IMSI (IMSI = "International Mobile Subscriber Identity"), eine PIN (PIN = "Personal Identity Number"), Sicherheitsalgorithmen und nutzerspezifische Daten. Eine SIM-Karte personalisiert ein Mobilfunk-Endgerät hinsichtlich des Nutzers und hinsichtlich des Netzbetreibers und ermöglicht die Abrechnung von Gesprächsgebühren von dem Netzbetreiber. Eine SIM-Karte wird auch als universelle Karte mit integrierter Schaltung (UICC - "Universal Integrated Circuit Card") bezeichnet. Die Erfindung bezeichnet somit als "Bereitstellung einer SIM-Karte" die einer physischen SIM-Karte oder einer eSIM zugeordneten und diese identifizierenden Daten.

Nach Bereitstellen der SIM-Karte am Mobilfunk-Gateway erfolgt ein Einbuchen eines Funkmoduls des Mobilfunk-Gateways im Mobilfunknetz unter Verwendung der bereitgestellten SIM-Karte. Insbesondere erfolgt eine Identifizierung und Authentifizierung des sich mit der SIM-Karte einbuchenden Funkmoduls. Dabei sind zwei Fälle zu unterscheiden. Wenn es sich bei dem Mobilfunknetz um das Heimat-Mobilfunknetz der SIM-Karte handelt, so erfolgt ein Einbuchen im Heimat-Mobilfunknetz. Sofern es sich bei dem Mobilfunknetz um ein anderes Mobilfunknetz handelt, das nicht das Heimat-Mobilfunknetz der SIM-Karte ist, so erfolgt ein Einbuchen im dem Mobilfunknetz über ein Roaming, d. h. das Funkmodul mit der SIM-Karte bucht sich mittels Roaming in dem Mobilfunknetz ein. In beiden Fällen erfolgt ein Einbuchen im Mobilfunknetz.

Nach Einbuchen des Funkmoduls erfolgt der Aufbau einer Mobilfunk-Datenverbindung vom Funkmodul über das Mobilfunknetz zum Internet. Der Aufbau der Mobilfunk-Datenverbindung kann unter Verwendung eines APN (APN = "Access Point Name") des Funkmoduls in an sich bekannter Weise erfolgen. Die Mobilfunk-Datenverbindung kann beispielsweise zu einem Einwahlpunkt bzw. Gateway des Mobilfunknetzes in das Internet aufgebaut werden, so dass über das Mobilfunknetz Zugang zum Internet besteht, insbesondere zum "lokalen" Internet, das sich an den Netzübergang anschließt. Ein solches Gateway stellt dabei die Schnittstelle zwischen dem Vermittlungsnetz des Mobilfunknetzes und dem Internet bzw. Datennetz (Packet Data Network) dar. Die aufgebaute Verbindung wird als "Mobilfunk-Datenverbindung" bezeichnet, da sie über das Mobilfunknetz erfolgt.

Das erfindungsgemäße Verfahren sieht des Weiteren den Aufbau einer ersten gesicherten Datenverbindung zwischen dem Mobilfunk-Gateway und dem Server vor, wobei Daten zwischen dem Internet und dem Server über die Mobilfunk-Datenverbindung und die erste gesicherte Datenverbindung transparent übertragbar sind. Bei der gesicherten Datenverbindung handelt es sich beispielsweise um einen VPN-Tunnel (VPN = "Virtual Private Network") oder anderen Tunnel. Zwischen dem Server und dem Mobilfunk-Gateway (genauer: dem betrachteten Funkmodul des Mobilfunk-Gateways) wird somit eine gesicherte Datenverbindung bereitgestellt, die das gesicherte Übertragen von Daten ermöglicht. Die Daten werden dabei transparent in dem Sinne übertragen, dass die Nutzdaten der übertragenen Datenpakete durchgereicht und nicht geändert werden.

Des Weiteren wird eine zweite gesicherte Datenverbindung zwischen dem TK-Endgerät und dem Server aufgebaut. Wie noch erläutert wird, kann die zweite gesicherte Datenverbindung in unterschiedlichen Ausführungsvarianten der vorliegenden Erfindung zeitlich vor oder nach der ersten gesicherten Datenverbindung aufgebaut werden.

Die erste gesicherte Datenverbindung und die zweite gesicherte Datenverbindung werden über ein paketvermitteltes Netz wie das Internet realisiert.

Schließlich werden die erste gesicherte Datenverbindung und die zweite gesicherte Datenverbindung durch den Server verbunden bzw. einander zugeordnet, so dass eine Datenverbindung des TK-Endgeräts zum Internet über die zweite gesicherte Datenverbindung, die erste gesicherte Datenverbindung und die Mobilfunk-Datenverbindung bereitgestellt wird.

Das erfindungsgemäße Verfahren beruht auf dem Gedanken, zwischen dem TK-Endgerät und dem Mobilfunk-Gateway unter Zwischenschaltung des Servers zwei miteinander gekoppelte gesicherte Datenverbindungen bereitzustellen, die dem TK-Endgerät einen gesicherten Datenzugang zum Mobilfunknetz bereitstellen, wobei sich das TK-Endgerät über die gekoppelten, gesicherten Datenverbindungen über den Mobilfunk-Gateway unter Verwendung der ihm zugeordneten SIM-Karte direkt im entfernt angeordneten Mobilfunknetz einwählen kann. Wenn sich beispielsweise das TK-Endgerät im Land A und der Mobilfunk-Gateway sowie das Mobilfunknetz im Land B befinden, so wird eine Datenverbindung vom TK-Endgerät im Land A zum Mobilfunk-Gateway im Land B bereitgestellt und bucht sich das TK-Endgerät über das Mobilfunk-Gateway mittels der SIM-Karte im Land B in das Mobilfunknetz ein.

Es wird durch das erfindungsgemäße Verfahren ein direkter Zugang zum Mobilfunknetz bereitgestellt, obwohl sich das TK-Endgerät in einem anderen Gebiet bzw. in einem anderen Land als dem Land, in dem das Mobilfunknetz realisiert ist, befindet. Das TK-Endgerät besitzt über die miteinander gekoppelten, gesicherten Datenverbindungen einen unmittelbaren Datenzugang zum Mobilfunknetz.

Sofern es sich bei dem Mobilfunknetz um das Heimat-Mobilfunknetz der betrachteten SIM-Karte handelt, kann das TK-Endgerät sämtliche Dienste des Heimat-Mobilfunknetzes ohne nationale Einschränkungen im Hinblick auf die verfügbaren Dienste nutzen. Für das Heimat-Mobilfunknetz erfolgt ein direktes Einbuchen im Heimat-Mobilfunknetz. Aspekte der Erfindung vermeiden somit eine Beschränkung der aus dem Ausland verfügbaren Dienste.

Sofern es sich bei dem Mobilfunknetz um ein anderes Mobilfunknetz handelt, das nicht das Heimat-Mobilfunknetz der betrachteten SIM-Karte ist, so eröffnen Aspekte der erfindungsgemäßen Lösung in effektiver Weise die Realisierung von Testszenarien. In diesem Fall bucht sich das Funkmodul des Mobilfunk-Gateways via Roaming im Mobilfunknetz ein. Dabei können zu Testszenarien dem Mobilfunk-Gateway SIM-Karten zugeordnet werden, um die Nutzbarkeit einzelner Dienste im Falle eines solchen Roaming zu prüfen. Beispielsweise kann ein deutscher Mobilfunkanbieter prüfen, welche Dienste die eigenen Kunden nutzen können, wenn sie sich in den USA in ein dortiges US-Mobilfunknetz einwählen, ohne dass hierfür eine Präsenz in den USA erforderlich ist. Beispielsweise kann getestet werden, ob der Inhaber einer SIM-Karte eines deutschen Mobilfunknetzes nach Einwahl via Roaming in ein US-Mobilfunknetz weiterhin E-Mail Nachrichten abrufen kann (vermutlich ja) oder sich weiterhin in seiner Bank einwählen kann (vermutlich nein). Dabei können natürlich beliebige unterschiedliche zwei Länder und nationalen Mobilfunknetze involviert sein.

Neben der Verfügbarkeit von Diensten in dem anderen Land können auch Qualitätsparameter wie zum Beispiel die Bandbreite und unterschiedliche Tarife der in dem anderen Land mit einem dortigen Mobilfunknetz per Roaming aufgebauten Mobilfunkverbindungen getestet werden. Solche Testszenarien können automatisiert unter Verwendung unterschiedlicher SIM-Karten unterschiedlicher Anbieter in unterschiedlichen ausländischen Netzen durchgeführt werden.

Bei dem TK-Endgerät kann es sich beispielsweise um ein Mobilfunk-Endgerät, einen PC (PC = "Personal Computer") oder einem Tablet-Computer handeln. Grundsätzlich können beliebige TK-Endgeräte verwendet werden.

Es wird darauf hingewiesen, dass die gemäß der vorliegenden Erfindung betrachteten "Datenverbindungen" auf den Schichten 1 bis 4 oder 1 bis 5 des OSI-Referenzmodells (OSI = "Open Systems Interconnection") entsprechend Dokument ITU-T X.200 (07/1994) realisiert sind, also nicht notwendigerweise konkrete Anwendungen oder Dienste betreffen. Die gemäß der vorliegenden Erfindung betrachteten Datenverbindungen stellen die Konnektivität zur Verfügung, auf deren Basis dann das TK-Endgerät Anwendungen und Dienste realisieren kann. Beispielsweise erlaubt es die erfindungsgemäße Lösung, dass unterschiedliche Betriebssysteme (zum Beispiel Android, iOS, Windows, Linux, etc.) und Applikationen (zum Beispiel Streaming-Dienste, Twitter, Facebook, etc.) durch die Datenverbindungen direkt mit dem Ziel-Mobilfunknetz kommunizieren und so Betriebssysteme/Applikationen verwenden und testen können, als ob sie direkt in das Mobilfunknetz eingewählt wären.

Zur verwendeten Terminologie wird des Weiteren auf folgendes hingewiesen.

Ein Mobilfunk-Gateway stellt eine Schnittstelle zwischen einem oder mehreren Telekommunikations-Mobilfunknetzen und beliebigen anderen Netzen, beispielsweise einem Telekommunikations-Festnetz oder einem IP-Netz bereit. Ein Mobilfunk-Gateway wird von einem Nutzer eines anderen Netzes angerufen oder erhält von diesem Datennachrichten und leitet die gewünschte Verbindung / Datenpakete über einen Mobilfunkkanal in das Mobilfunknetz weiter, in dem sich der Empfänger befindet. Hierzu implementiert das Mobilfunk-Gateway die Funktionalität eines Mobilfunktelefons und baut gewissermaßen als Mobilfunktelefon eine Verbindung zu dem Empfänger auf. Mobilfunk-Gateways verfügen somit über die gleichen Mobilfunkmodule, wie sie in Mobilfunk-Endgeräten (Handys) zum Einsatz kommen. Derartige Mobilfunk-Gateways sind beispielsweise aus der DE 103 14 144 A1 bekannt. Dabei ist vorgesehen, dass ein Mobilfunk-Gateway eine Vielzahl von SIM-Karten für die verwalteten Mobilfunkkanäle enthält. Es können beliebige SIM-Karten verschiedener Netzbetreiber eingesetzt werden.

Die Erfindung sieht weiter als eine Variante vor, dass die SIM-Karte dem Mobilfunk-Gateway durch den Server bereitgestellt wird. Für diesen Fall handelt es sich bei dem Server zusätzlich zu seiner Funktionalität als Datenrouter zwischen den beiden gesicherten Datenverbindungen um einen SIM-Server, der eine Vielzahl von SIM-Karten verwaltet. Die wesentliche Rolle, die der Server für das erfindungsgemäße Verfahren spielt, indem er an gesicherten Datenverbindungen sowohl zum Mobilfunk-Gateway als auch zum TK-Endgerät beteiligt ist und diese miteinander verbindet, wird dabei weiter insofern verstärkt, als der Server auch die SIM-Karten verwaltet und eine der vom Server verwalteten SIM-Karten dem TK-Endgerät zugeordnet und dem Mobilfunk-Gateway bereitgestellt wird.

Ein SIM-Server ist ein Server, der SIM-Karten für die Mobilfunkkommunikation verwaltet und bereitstellt. Je nach Anforderung und Bedarf wird eine SIM-Karte seitens eines Mobilfunk-Gateways vom SIM-Server angefordert und von diesem dem Mobilfunk-Gateway bereitgestellt. Die SIM-Karten können dabei als eSIM elektronisch vorliegen und über ein Cloud-basiertes Management verwaltet werden. Das Bereitstellen einer SIM-Karte am Mobilfunk-Gateway erfolgt nicht physisch, weder wenn es sich bei der SIM-Karte um eine physische SIM-Karte handelt noch wenn es sich bei der SIM-Karte um eine eSIM handelt. Es werden lediglich die SIM-Informationsdaten, die eine SIM-Karte identifizieren und deren Funktionalität widerspiegeln, an das Mobilfunk-Gateway übertragen. Die SIM-Karte befindet sich somit gewissermaßen virtuell auf dem SIM-Server bzw. wird von diesem verwaltet und ihre Funktionalität wird bei Bedarf auf dem Mobilfunk-Gateway auf der Grundlage spezifischer Informationen und Daten, die vom SIM-Server übertragen werden, emuliert. Dies ermöglicht die Verwendung eines zentralen SIM-Karten-Pools für ein oder mehrere Mobilfunk-Gateways. Derartige SIM-Server sind beispielsweise in der DE 103 11 980 A1 beschrieben.

Die Erfindung sieht in einer anderen Variante vor, dass die SIM-Karte dem Mobilfunk-Gateway durch einen gesonderten SIM-Server bereitgestellt wird, der ungleich dem Server ist, der die erste gesicherte Datenverbindung zum Mobilfunk-Gateway und die zweite gesicherte Datenverbindung zum TK-Endgerät aufbaut. In einem solchen Fall kommunizieren jedoch der SIM-Server und der Server miteinander. Insbesondere kann vorgesehen sein, dass der Server dem SIM-Server den Befehl erteilt oder an den SIM-Server weiterleitet, dem Mobilfunk-Gateway eine bestimmte SIM-Karte bereitzustellen. Allgemein kann vorgesehen sein, dass der Befehl bzw. Trigger, dass der SIM-Server dem Mobilfunk-Gateway eine bestimmte SIM-Karte bereitstellt, durch eine manuelle, zum Beispiel durch einen Nutzer ausgelöste Information oder durch eine automatische, zum Beispiel zeitgesteuerte Information bereitgestellt wird. Der SIM-Server kann einen entsprechenden Befehl durch den Server, direkt durch einen Nutzer oder in anderer Weise erhalten.

Weiter kann vorgesehen sein, dass der SIM-Server den Server nach Bereitstellung der SIM-Karte beim Mobilfunk-Gateway über diese Bereitstellung informiert, so dass der Server Kenntnis darüber hat, dass dem Mobilfunk-Gateway eine bestimmte SIM-Karte bereitgestellt worden ist (nämlich die SIM-Karte, die dem TK-Endgerät zugeordnet wurde).

Eine weitere Ausgestaltung sieht vor, dass die SIM-Karte dem TK-Endgerät durch den SIM-Server zugeordnet wird.

Eine weitere Ausgestaltung der Erfindung sieht vor, dass die zweite gesicherte Datenverbindung zwischen dem TK-Endgerät und dem Server zeitlich vor der ersten gesicherten Datenverbindung zwischen dem Mobilfunk-Gateway und dem Server aufgebaut wird, wobei der Aufbau der zweiten gesicherten Datenverbindung das Bereitstellen der SIM-Karte beim Mobilfunk-Gateway auslöst. Gemäß dieser Ausführungsvariante wird als erstes eine gesicherte Datenverbindung - die zweite gesicherte Datenverbindung - zwischen dem TK-Endgerät und dem Server aufgebaut. Im Rahmen dieser Datenverbindung wird dem TK-Endgerät eine SIM-Karte zugeordnet. Gleichzeitig triggert der Aufbau dieser zweiten gesicherten Datenverbindung automatisch die Bereitstellung der SIM-Karte beim Mobilfunk-Gateway (direkt durch den Server oder einen zugeordnete SIM-Server). Wenn gemäß dem erfindungsgemäßen Verfahren zu einem späteren Zeitpunkt die erste gesicherte Datenverbindung zwischen dem Mobilfunk-Gateway und dem Server aufgebaut wird, so muss der Server diese erste gesicherte Datenverbindung nur noch mit der zuvor aufgebauten zweiten gesicherten Datenverbindung zwischen dem TK-Endgerät und dem Server verbinden.

Alternativ ist vorgesehen, dass die erste gesicherte Datenverbindung zwischen dem Mobilfunk-Gateway und dem Server zeitlich vor der zweiten gesicherten Datenverbindung zwischen dem TK-Endgerät und dem Server aufgebaut wird. In einem solchen Fall kann vorgesehen sein, dass zur Zuordnung der SIM-Karte zum TK-Endgerät eine gesonderte Verbindung zwischen dem Server und dem TK-Endgerät aufgebaut wird, die dann aber wieder aufgegeben wird und die auch keine gesicherte Verbindung sein braucht. In einem solchen Fall kann dabei vorgesehen sein, dass das TK-Endgerät einen Befehl an dem Server aussendet, der ein Bereitstellen der SIM-Karte beim Mobilfunk-Gateway auslöst, auch dies, ohne dass ein solcher Befehl notwendigerweise über eine gesicherte Verbindung zum Server übertragen wird. Alternativ kann vorgesehen sein, dass das TK-Endgerät einen Befehl zum Bereitstellen der SIM-Karte beim Mobilfunk-Gateway direkt an das Mobilfunkgateway sendet.

Eine Ausgestaltung der Erfindung sieht vor, dass der Server die erste gesicherte Datenverbindung und die zweite gesicherte Datenverbindung verbindet, indem er die beiden Verbindungen einander zuordnet, so dass Daten der einen Verbindung auf die andere Verbindung weitergeleitet werden können und umgekehrt. Eine solche Zuordnung kann beispielsweise über IP-Adressen der beiden gesicherten Datenverbindungen erfolgen. So ist der zweiten gesicherten Datenverbindung, die beispielsweise als VPN-Tunnel ausgebildet ist, eine eigene IP-Adresse zugeordnet, die den VPN-Tunnel identifiziert. In entsprechender Weise ist der ersten gesicherten Datenverbindung, die ebenfalls beispielsweise als VPN-Tunnel ausgebildet ist, eine eigene IP-Adresse zugeordnet, die diesen VPN-Tunnel identifiziert. Der Server als Beteiligter beider gesicherter Datenverbindungen kennt beide IP-Adressen sowie, dass beide gesicherten Datenverbindungen derselben SIM-Karte zugeordnet ist, und kann diese einander zuordnen sowie eingehende und ausgehende Datenpakete auf die jeweils andere gesicherte Datenverbindung weiterleiten, wobei der Server ein IP-Routing vornimmt.

Eine Ausgestaltung der Erfindung sieht vor, dass das TK-Endgerät nach der Bereitstellung einer Datenverbindung des TK-Endgeräts zum Internet eine Anwendung oder einen Dienst realisiert und hierzu eine Telekommunikationsverbindung (TK-Verbindung) zu einem Server des Internet und/oder zu einem weiteren TK-Endgerät aufbaut. Eine solche TK-Verbindung dient der Realisierung der Anwendung bzw. des Dienstes, wobei zum Aufbau der TK-Verbindung und zur Übertragung von Nutzdaten über die TK-Verbindung auf die zuvor bereitgestellte Konnektivität bzw. die bereitgestellten Datenverbindungen aufgebaut wird. Beispielsweise wird über die TK-Verbindung eine SMS/MMS-Nachricht zu einem Server des Internet und/oder einem weiteren TK-Endgerät übertragen und/oder von diesem empfangen. Ein entsprechender Dienst kann auf der Nutzerseite oder auf der Server-Seite (zum Beispiel via Web-Server) zur Verfügung gestellt werden.

Als weitere zusätzliche Option kann ein Sprachanruf zwischen dem Internet und dem TK-Endgerät, etwa via VolP, zur Verfügung gestellt werden. Dabei dient der Server als Vermittlungssystem, um Nachrichten und Rufe zwischen dem Mobilfunk-Gateway und dem TK-Endgerät zu realisieren.

Wie bereits erläutert, kann das Mobilfunknetz ein Mobilfunknetz einer anderen geographischen Region als der Region sein, in dem das Heimat-Mobilfunknetz der SIM-Karte präsent ist. Insbesondere kann das Mobilfunknetz ein Mobilfunknetz eines anderen Landes sein als des Landes, in dem das Heimat-Mobilfunknetz der SIM-Karte realisiert ist. Dabei erfolgt das Einbuchen eines Funkmoduls des Mobilfunk-Gateways im Mobilfunknetz unter Verwendung der bereitgestellten SIM-Karte durch Roaming.

Alternativ kann vorgesehen sein, dass das Mobilfunknetz das Heimat-Mobilfunknetz der SIM-Karte ist, d. h. dasjenige Mobilfunknetz, dem die SIM-Karte zugeordnet ist.

Weitere Ausgestaltungen sehen vor, dass die erste gesicherte Datenverbindung und/oder die zweite gesicherte Datenverbindung zusätzlich verschlüsselt sind. Durch den Einsatz von Verschlüsselungsmethoden wird eine nicht verfälschbare und absichere Datenstrecke bis hin zum entfernten Mobilfunknetz garantiert.

Des Weiteren können Ausführungsvarianten vorgesehen sein, bei denen Algorithmen die logische Verbindung zwischen einem TK-Endgerät und der verwendeten SIM-Karte und/oder die Bereitstellung der SIM-Karte beim Mobilfunk-Gateway festlegen. Dabei kann insbesondere eine zeitliche Steuerung der Verwendung der SIM-Karte im Mobilfunk-Gateway erfolgen, wobei die Steuerung der Verwendung der SIM-Karte durch Parameter wie z.B. Netzqualität, Datendurchsatz, Prepaid-Guthaben, Anzahl von SMS, MMS, Rufen, Gesprächsminuten, verwendetem Datenvolumen, etc. erfolgen kann. Eine solche automatische Steuerung kann beispielsweise zur Realisierung von Testszenarien eingesetzt werden.

In einem weiteren Erfindungsaspekt betrifft die vorliegende Erfindung ein Serversystem, das aufweist:
- Mittel, die dazu vorgesehen und ausgebildet sind, eine SIM-Karte einem TK-Endgerät zuzuordnen;
- Mittel, die dazu vorgesehen und ausgebildet sind, die dem TK-Endgerät zugeordnete SIM-Karte einem Mobilfunk-Gateway bereitzustellen;
- Mittel, die dazu vorgesehen und ausgebildet sind, das Mobilfunk-Gateway zu veranlassen, sich im Mobilfunknetz unter Verwendung der erhaltenen SIM-Karte einzubuchen und eine Mobilfunk-Datenverbindung über das Mobilfunknetz zum Internet aufzubauen;
- Mittel, die dazu vorgesehen und ausgebildet sind, eine erste gesicherte Datenverbindung zwischen dem Server und einem Mobilfunk-Gateway aufzubauen, wobei Daten zwischen dem Mobilfunknetz und dem Server über die Mobilfunk-Datenverbindung und die erste gesicherte Datenverbindung transparent übertragbar sind;
- Mittel, die dazu vorgesehen und ausgebildet sind, eine zweite gesicherte Datenverbindung zwischen dem Server und dem TK-Endgerät aufzubauen; und
- Mittel, die dazu vorgesehen und ausgebildet sind, die erste gesicherten Datenverbindung und die zweite gesicherte Datenverbindung zur Bereitstellung einer Datenverbindung des TK-Endgeräts zum Internet über die zweite gesicherte Datenverbindung, die erste gesicherte Datenverbindung und die Mobilfunk-Datenverbindung zu verbinden.

Die genannten Mittel umfassen beispielsweise einen Prozessor zur Ausführung von Anweisungen und einen Speicher, der mit dem Prozessor gekoppelt ist und in dem Anweisungen gespeichert sind, die bei Ausführung durch den Prozessor den Prozessor veranlassen, die genannten Schritte durchzuführen. Die Mittel werden mit anderen Worten durch eine Software in Kombination mit einem Prozessor, der die Software ausführt, realisiert. Die genannten Mittel können jeweils durch einen eigenen Prozessor mit zugeordneter Software realisiert sein oder die genannten Mittel können gemeinsam durch einen oder mehrere Prozessoren bereitgestellt werden.

Das Serversystem ist in einer Erfindungsvariante in mindestens zwei verschiedene physikalische oder virtuelle Server aufgeteilt. Insbesondere ist eine Aufteilung derart vorgesehen, dass das Serversystem einen gesonderten SIM-Server aufweist, wobei die Mittel, die dazu vorgesehen und ausgebildet sind, die dem TK-Endgerät zugeordnete SIM-Karte einem Mobilfunk-Gateway bereitzustellen, durch den SIM-Server bereitgestellt werden. Die anderen Mittel sind beispielsweise in einem anderen Server realisiert.

Der SIM-Server stellt dabei die SIM-Karte dem Mobilfunk-Gateway zur Verfügung und initiiert somit das Einbuchen des Mobilfunk-Gateways. Der Befehl bzw. Trigger dazu, dass der SIM-Server die SIM-Karte dem Mobilfunk-Gateway zur Verfügung stellt, kann auf vielfältige Weise bereitgestellt werden, beispielsweise durch eine manuelle, zum Beispiel einen Nutzer ausgelöste oder durch eine automatische, zum Beispiel zeitgesteuerte Information.

In einer Ausgestaltung sind auch die Mittel, die dazu vorgesehen und ausgebildet sind, das Mobilfunk-Gateway zu veranlassen, sich im Mobilfunknetz unter Verwendung der erhaltenen SIM-Karte einzubuchen und eine Mobilfunk-Datenverbindung über das Mobilfunknetz zum Internet aufzubauen, in den genannten SIM-Server integriert.

Es wird jedoch darauf hingewiesen, dass eine Aufteilung des Serversystems in mindestens zwei verschiedene physikalische oder virtuelle Server nicht notwendigerweise der Fall ist. In einer zweiten Erfindungsvariante sind sämtliche Mittel des Serversystems in einem Server realisiert. Für diesen Fall ist vorgesehen, dass ein solcher Server des weiteren Mittel aufweist, die dazu vorgesehen und ausgebildet sind, eine Mehrzahl von SIM-Karten zur verwalten, wobei wie bereits erwähnt der Begriff "SIM-Karte" physische SIM-Karten und/oder eSIMs umfasst. Der Server weist somit zusätzlich die Funktionalität eines SIM-Servers auf.

Weiter wird darauf hingewiesen, dass die Mittel, die dazu vorgesehen und ausgebildet sind, das Mobilfunk-Gateway zu veranlassen, sich im Mobilfunknetz unter Verwendung der erhaltenen SIM-Karte einzubuchen und eine Mobilfunk-Datenverbindung in das Mobilfunknetz aufzubauen, beispielsweise durch Mittel bereitgestellt werden, die eine Nachricht erzeugen, die an das Mobilfunk-Gateway gesandt wird, wobei die Nachricht die SIM-Informationsdaten enthält, und wobei der Empfang der Nachricht beim Mobilfunk-Gateway das Einbuchen der SIM-Karte und den Aufbau der Mobilfunk-Datenverbindung triggert.

Die Erfindung wird nachfolgend unter Bezugnahme auf die Figuren der Zeichnung anhand mehrerer Ausführungsbeispiele näher erläutert. Es zeigen:
- Figur 1: ein Ausführungsbeispiel einer Telekommunikationsanordnung, die zur Durchführung eines Verfahrens zum Bereitstellen einer Datenverbindung zum Internet an einem TK-Endgerät geeignet und ausgebildet ist;
- Figur 2: in einer Telekommunikationsanordnung gemäß der Figur 1 eine Darstellung der Datenverbindungen zwischen dem TK-Endgerät und dem Internet, wobei die Datenverbindungen gesicherte Datenverbindungen zwischen dem TK-Endgerät und einem Server und zwischen dem Server und einem Mobilfunk-Gateway umfassen;
- Figur 3: ein Flussdiagramm, welches den Signalisierungsablauf zwischen TK-Endgerät, Server, Mobilfunk-Gateway und Mobilfunknetz zum Aufbau einer Datenverbindung zum Internet gemäß einer Ausführungsform des erfindungsgemäßen Verfahrens wiedergibt;
- Figur 4: die Fortsetzung des Flussdiagramms der Figur 3;
- Figur 5: ein weiteres Flussdiagramm, welches den Signalisierungsablauf zwischen TK-Endgerät, Server, Mobilfunk-Gateway und Mobilfunknetz zum Aufbau einer Datenverbindung zum Internet gemäß einer Ausführungsform des erfindungsgemäßen Verfahrens wiedergibt;
- Figur 6: die Fortsetzung des Flussdiagramms der Figur 5;
- Figur 7: ein Flussdiagramm, welches den Signalisierungsablauf zwischen TK-Endgerät, Server, Mobilfunk-Gateway und Mobilfunknetz zum Versenden einer SMS/MMS-Nachricht zu einem regionalen Teilnehmer oder Dienstanbieter wiedergibt;
- Figur 8: ein Flussdiagramm, welches den Signalisierungsablauf zwischen TK-Endgerät, Server, Mobilfunk-Gateway und Mobilfunknetz zum Empfangen einer SMS/MMS-Nachricht von einem regionalen Teilnehmer oder Dienstanbieter wiedergibt; und
- Figur 9: ein Ablaufdiagramm, das Schritte eines Verfahrens zum Bereitstellen einer Datenverbindung zum Internet an einem TK-Endgerät darstellt.

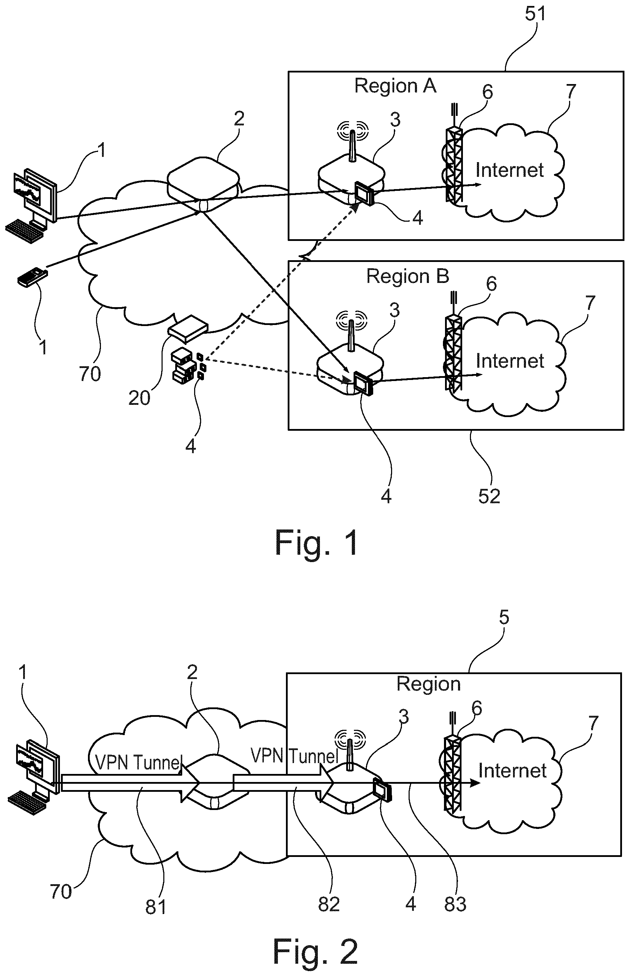

Die Figur 1 zeigt eine Telekommunikationsanordnung, die Netzwerke und Telekommunikations-Komponenten umfasst, mit denen ein erfindungsgemäßes Verfahren zum Aufbau einer Datenverbindung zum Internet realisierbar ist.

Die Telekommunikationsanordnung umfasst als wesentliche Komponenten ein TK-Endgerät 1, einen Server 2, ein Mobilfunk-Gateway 3, eine SIM-Karte 4, Mobilfunknetze 51, 52 und das Internet 7.

Das TK-Endgerät 1 kann ein Mobilfunk-Endgerät oder ein nicht mobiles Endgerät, beispielsweise ein PC oder ein Tablet-Computer, sein. Das TK-Endgerät 1 kann über ein Paketvermittlungsnetz, beispielsweise das Internet 70 oder ein Intranet, mit dem Server 2 kommunizieren. Ebenso kann der Server 2 über das Paketvermittlungsnetz mit dem Mobilfunk-Gateway 3 kommunizieren.

Der Server 2 dient der Bereitstellung einer gesicherten Datenverbindung zwischen dem TK-Endgerät 1 und den Mobilfunk-Gateway 3, wie noch erläutert wird. Dabei kann vorgesehen sein, dass der Server 2 zusätzlich die Funktionalität eines SIM-Servers aufweist und einen Pool von SIM-Karten 4 verwaltet. Die SIM-Karten 4 können physisch im Server 2 angeordnet sein oder als eSIMs im Server vorliegen. Alternativ ist, wie der Figur 1 dargestellt, ein gesonderter SIM-Server 20 vorgesehen, der beispielsweise als Cloud-basiertes SIM-Managementsystem ausgebildet ist, wobei der Server 2 mit dem SIM-Server 20 kommuniziert und beispielsweise Befehle an den SIM-Server versendet, bestimmte SIM-Karten 4 dem Mobilfunk-Gateway 3 bereitzustellen. Der Server 2 und der SIM-Server 20 bilden dabei ein Serversystem im Sinne der vorliegenden Erfindung.

Nachfolgend wird davon ausgegangen, dass dem Server 2 ein SIM-Server 20 zugeordnet ist, wobei der SIM-Server 20 das eigentliche Management der SIM-Karten vornimmt, wobei wie erläutert diese Funktionalität alternativ in den Server 2 integriert sein kann.

Der Server 2 kann, beispielsweise auf entsprechenden Befehl des Servers 2 oder des TK-Endgeräts 1, eine bestimmte SIM-Karte dem TK-Endgerät 1 logisch zuordnen. Weiter kann der Server 2 veranlassen, beispielsweise auf Befehl des TK-Endgerät 1 oder automatisiert auf eigene Veranlassung, dass der SIM-Server 20 die dem TK-Endgerät 1 logisch zugeordnete SIM-Karte 4 dem Mobilfunk-Gateway 3 bereitstellt, wobei das Bereitstellen einer solchen SIM-Karte 9 nicht physisch erfolgt, sondern lediglich die SIM-Informationsdaten, die eine SIM-Karte identifizieren und deren Funktionalität widerspiegeln, per Datenübertragung über das Netz 70 an das Mobilfunk-Gateway 4 übertragen werden.

Das Mobilfunk-Gateway 3 weist eine Mehrzahl von Funkmodulen für die Mobilfunkkommunikation auf (nicht gesondert dargestellt). Dem Mobilfunk-Gateway 3 sind eine Mehrzahl von SIM-Karten 4 zugeordnet und zuordenbar, die jeweils eine Nutzung eines Funkmoduls für die Mobilfunkkommunikation ermöglichen. Ein Funkmodul gibt Daten auf einen Mobilfunkkanal und empfängt über den Mobilfunkkanal Daten. Jedem Funkmodul sind ein oder mehrere SIM-Karten zuordbar, wobei zu einem bestimmten Zeitpunkt immer nur eine SIM-Karte aktiviert ist.

Das Mobilfunk-Gateway 3 befindet sich im Empfangsbereich eines Mobilfunknetzes, wobei in dem Ausführungsbeispiel der Figur 1 zwei Mobilfunk-Gateways 3, die sich jeweils in einem anderen Mobilfunknetz 51, 52 befinden, dargestellt sind. Die unterschiedlichen Mobilfunknetze 51, 52 befinden sich in unterschiedlichen Regionen A, B, bei denen es sich beispielsweise um unterschiedliche Länder handelt. Jedes Mobilfunknetz 51, 52 weist in üblicher Weise eine Mehrzahl von Mobilfunk-Sendestationen 6 auf, wie in der Figur 1 schematisch dargestellt. Weiter weist jedes Mobilfunknetz 51, 52 einen Übergang in das lokale Internet 7 auf, d. h. das Mobilfunknetz 51, 52 weist in an sich bekannter Weise nicht näher dargestellte Einwählpunkte bzw. lokale Übergänge bzw. Gateways in das Internet 7 auf.

Der Telekommunikationsanordnung der Figur 1 liegt die Ausgangssituation zugrunde, dass das TK-Endgerät 1 sich in einem anderen Land oder einer anderen Region als dem Land oder der Region befindet, in dem/der das Mobilfunknetz 51, 52 (nachfolgend allgemein als Mobilfunknetz 5 bezeichnet) realisiert ist. Eine Verbindung zwischen dem TK-Endgerät 1 und dem Server 2 wird als gesicherte Datenverbindung in Form eines VPN-Tunnels über das Netz 70 bereitgestellt. Ebenso wird eine gesicherte Datenverbindung in Form eines VPN-Tunnels über das Netz 70 zwischen dem Server 2 und dem jeweiligen Mobilfunk-Gateway 3 bereitgestellt. Das Mobilfunknetz 5, in dessen Empfangsbereich sich das Mobilfunk-Gateway 3 befindet, kann das Heimat-Mobilfunknetz der jeweiligen SIM-Karte 4 sein, über die ein Verbindungsaufbau ins Mobilfunknetz 5 erfolgt. Dieses muss jedoch nicht notwendigerweise der Fall sein. Alternativ kann das Mobilfunknetz 5, in dessen Empfangsbereich sich das Mobilfunk-Gateway 3 befindet, ein Mobilfunknetz sein, dem die SIM-Karte 4 nicht zugeordnet ist, für welchen Fall eine Einwahl ins Mobilfunknetz durch das Mobilfunk-Gateway 3 bzw. ein Funkmodul des Mobilfunk-Gateways 3 per Roaming erfolgt.

Die Figur 2 zeigt schematisch die aufgebauten Datenverbindungen. Zwischen dem TK-Endgerät 1 und dem Server 2 ist eine gesicherte Datenverbindung 81 in Form eines VPN-Tunnels aufgebaut, die als zweite gesicherte Datenverbindung bezeichnet wird. Zwischen dem Server 2 und dem Mobilfunk-Gateway 3 ist eine weitere gesicherte Datenverbindung 82 in Form eines VPN-Tunnels aufgebaut, die als erste gesicherte Datenverbindung bezeichnet wird. Zwischen dem Mobilfunk-Gateway 3 bzw. seinem im Mobilfunknetz 5 eingebuchten Funkmodul besteht eine Mobilfunk-Datenverbindung 83 in das Mobilfunknetz 5. Diese Datenverbindung 83 kann durch einen Übergang in das Internet 7 erweitert werden.

### Typische Szenarien sind folgende:

Szenario 1: Das TK-Endgerät 1 befindet sich im Inland, zum Beispiel in Deutschland. Das Mobilfunknetz 5 und der Mobilfunk-Gateway 3 befinden sich im Ausland, beispielsweise den USA. Das Mobilfunknetz 5 ist nicht das Heimat-Mobilfunknetz der SIM-Karte 4, die zur Einwahl in das Mobilfunknetz 5 verwendet wird.

Szenario 2: Das TK-Endgerät 1 befindet sich im Ausland, zum Beispiel in Frankreich. Das Mobilfunknetz 5 und der Mobilfunk-Gateway 3 befinden sich im Inland, beispielsweise in Deutschland. Das Mobilfunknetz 5 ist das Heimat-Mobilfunknetz der SIM-Karte 4, die zur Einwahl in das Mobilfunknetz 5 verwendet wird.

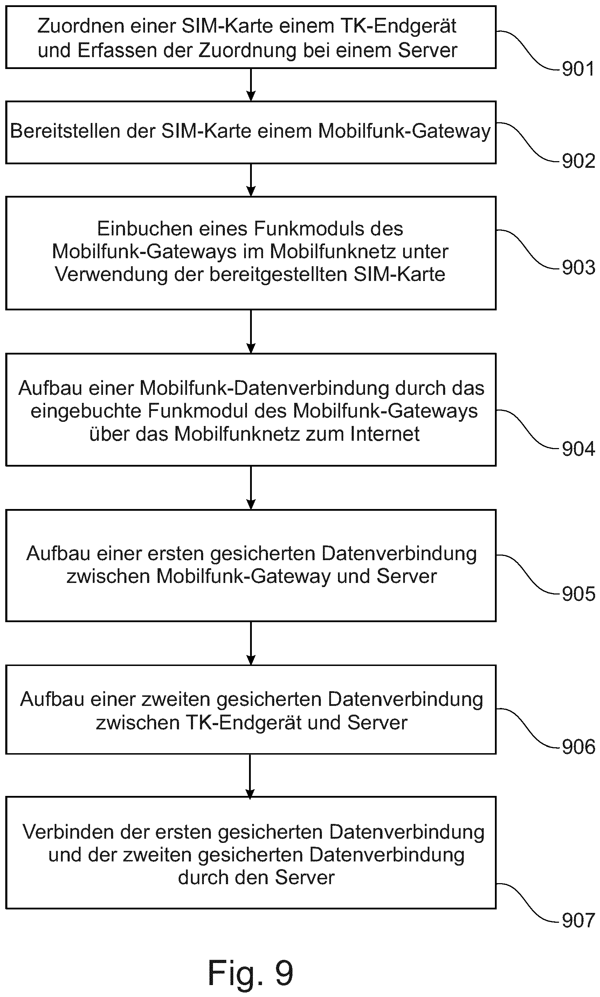

Das mit der Telekommunikationsanordnung gemäß der Figur 1 durchgeführte Verfahren wird anhand der Figur 9 beispielhaft erläutert. Gemäß Schritt 901 wird dem TK-Endgerät eine SIM-Karte 4 zugeordnet und wird diese Zuordnung an den Server 2 erfasst. Es erfolgt dabei lediglich eine logische Zuordnung der SIM-Karte 4 zum TK-Endgerät 1, ohne dass die SIM-Karte 4 bzw. SIM-Informationsdaten an das TK-Endgerät 1 übertragen werden. Dementsprechend ist es auch für das vorliegende Verfahren nicht von Relevanz, ob es sich bei dem TK-Endgerät 1 um ein Mobilfunk-Endgerät oder um ein anderes TK-Endgerät handelt. Die logische Zuordnung kann automatisch oder durch manuellen Befehl erfolgen. Dabei ist beispielsweise vorgesehen, dass die SIM-Karte 4 dem TK-Endgerät 1 durch den Server 2 zugeordnet wird, der mit dem SIM-Server 20 hierzu kommuniziert.

Gemäß Schritt 902 wird die SIM-Karte 4 dem Mobilfunk-Gateway 3 bereitgestellt. Hierzu werden die SIM-Informationsdaten vom SIM-Server 20 (oder alternativ vom Server 2) an das Mobilfunk-Gateway 3 übertragen. In Schritt 903 bucht sich ein Funkmodul des Mobilfunk-Gateways 3 im Mobilfunknetz 5 unter Verwendung der bereitgestellten SIM-Karte 4 ein. Wie bereits erwähnt, kann es sich bei dem Mobilfunknetz 5 um das Heimat-Mobilfunknetz der SIM-Karte 4 handeln, für welchen Fall ein direktes Einbuchen erfolgt, oder kann es sich um ein anderes Mobilfunknetz handeln, für welchen Fall ein Einbuchen via Roaming erfolgt.

In Schritt 904 wird eine Mobilfunk-Datenverbindung durch das eingebuchte Funkmodul über das Mobilfunknetz 5 ins Internet aufgebaut. Anschließend wird gemäß Schritt 905 die erste gesicherte Datenverbindung 82 per VPN-Tunnel zwischen dem Mobilfunk-Gateway 3 und dem Server 2 aufgebaut. Eine zweite gesicherte Datenverbindung 83 per VPN-Tunnel zwischen dem TK-Endgerät 1 und dem Server 2 wird gemäß Schritt 106 aufgebaut. Diese gesicherte Datenverbindung 83 kann bereits zuvor aufgebaut worden sein oder wird nach der gesicherte Datenverbindung 82 aufgebaut.

Gemäß Schritt 907 wird die erste gesicherte Datenverbindung 82 mit der zweiten gesicherten Datenverbindung 81 durch den Server 2 verbunden. Hierdurch wird eine Datenverbindung des TK-Endgeräts 1 zum Internet über die zweite gesicherte Datenverbindung 81, die erste gesicherte Datenverbindung 82 und die Mobilfunk-Datenverbindung 83 bereitgestellt, siehe auch Figur 2. Der Server 2 sorgt dabei dafür, dass die beiden gesicherten Datenverbindungen 81, 82 einander zugeordnet und Daten auf die jeweils andere Datenverbindung weitergegeben werden, so dass die beiden gesicherten Datenverbindungen 81, 82 zusammen einen VPN-Tunnel vom TK-Endgerät 1 bis zum Mobilfunk-Gateway 3 realisieren.

Gemäß dem obigen Szenario 1 erlaubt das bereitgestellte Verfahren die Realisierung verschiedener Testszenarien, wobei getestet werden kann, welche Dienste mit welchen Qualitätsmerkmalen einem Nutzer bereitstehen, der sich mit seiner SIM-Karte, die einem deutschen Mobilfunknetz zugeordnet ist, in einem Mobilfunknetz in den USA per Roaming einwählt. Diese Testszenarien können realisiert werden, ohne dass es erforderlich ist, sich mit einem TK-Endgerät vor Ort in den USA einzuwählen. Die beiden gesicherten Datenverbindungen 81, 82 bilden dabei einen Datenzugang per Datenübertragung über das Internet (und nicht über Mobilfunk- bzw. Telekommunikationsnetze) zum Mobilfunk-Gateway 3 in dem anderen Land.

Gemäß dem obigen Szenario 2 erlaubt das bereitgestellte Verfahren die Nutzung sämtlicher Dienste, die im Heimatnetz verfügbar sind, auch wenn sich das TK-Endgerät 1 im Ausland befindet. Das im Ausland befindliche TK-Endgerät 1 kann sich über den durch die beiden gesicherten Datenverbindungen 81, 82 gebildeten Datenzugang beim Mobilfunk-Gateway 3 des Heimat-Mobilfunknetzes einwählen, so dass keine Beschränkungen im Hinblick auf die verfügbaren Dienste bestehen.

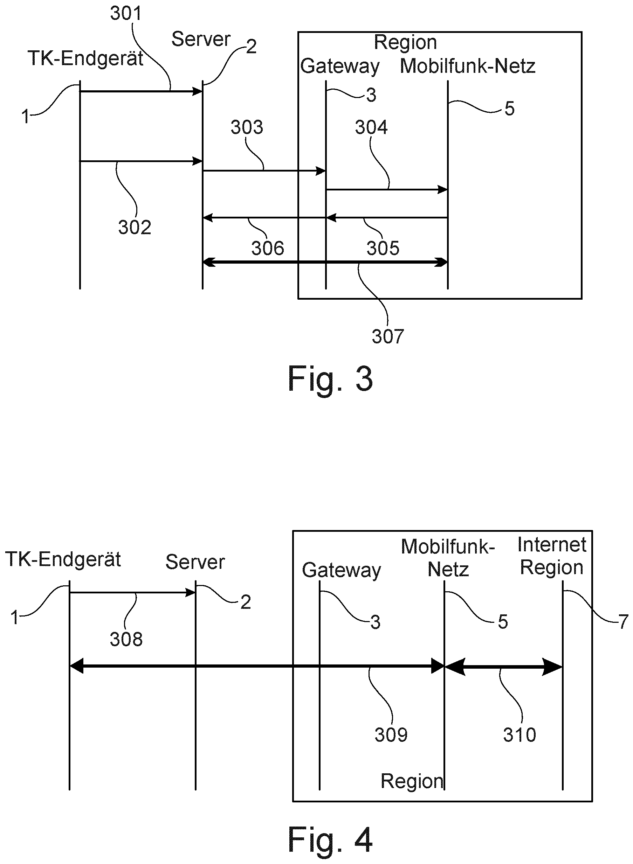

Im Folgenden werden in den Figuren 3 bis 8 anhand mehrerer Ausführungsbeispiele die Befehle und Signalisierungen zwischen den einzelnen Komponenten der Telekommunikationsanordnung erläutert, die einen Zugang zum Internet und die Nutzung verschiedener Dienste ermöglichen.

Die Figuren 3 und 4 zeigen gemäß einer ersten Ausführungsvariante den Signalisierungsablauf zwischen TK-Endgerät 1, Server 2, Mobilfunk-Gateway 3 und Mobilfunknetz 5.

Gemäß Schritt 301 wird zu irgendeinem Zeitpunkt dem TK-Endgerät 1 eine SIM-Karte zugeordnet. Die Zuordnung kann über den Nutzer des TK-Endgerätes 1, einen Administrator oder den Server 2 erfolgen. Die Zuordnung kann durch manuellen Befehl oder automatisiert erfolgen. Eine für den Schritt 301 erforderliche Datenverbindung zwischen dem TK-Endgerät 1 und dem Server 2 kann anschließend wieder aufgegeben werden. In jedem Fall ist der Server 2 über die Zuordnung zu informieren, sofern sie nicht durch ihn selbst erfolgt.

Gemäß Schritt 302 wird ein Befehl zum Einbuchen der SIM-Karte in das Mobilfunk-gateway vom TK-Endgerät 1 an den Server 2 übersandt. Der Befehl kann manuell oder automatisch erzeugt sein. Daraufhin wird die SIM-Karte vom Server 2 gemäß Schritt 303 dem Mobilfunk-Gateway 3 zugewiesen (entweder direkt oder über den SIM-Server 20 gemäß der Figur 1). Auch der Befehl 302 kann an den Server 2 übersandt werden, ohne dass eine Datenverbindung aufrechterhalten bleibt.

Gemäß Schritt 304 wird die SIM-Karte mittels eines Funkmoduls des Mobilfunk-Gateways 3 im Mobilfunknetz 5 eingebucht. Es wird anschließend gemäß Schritt 305 eine Datenverbindung im Mobilfunknetz 5 aufgebaut. Dies erfolgt über eine lokale IP-Adresse des Mobilfunk-Gateways 3 und einen lokalen Zugang des Mobilfunk-Gateways 3 zum Mobilfunknetz 5. Sobald dies erfolgt ist, wird eine gesicherte Datenverbindung (die Datenverbindung 82 der Figur 2) gemäß Schritt 306 zwischen dem Mobilfunk-Gateway 3 und dem Server 2 aufgebaut. Der gesicherten Datenverbindung wird eine erste IP-Tunnel-Adresse zugewiesen. Die Daten dieses Datenkanals werden dann transparent zwischen Server 2 und Mobilfunknetz 5 ausgetauscht, wobei im Mobilfunk-Gateway ein Routen der Daten zwischen der gesicherten Datenverbindung zum Server 2 und der Mobilfunk-Datenverbindung ins Mobilfunknetz 5 erfolgt, wobei hierzu die Daten bzw. Datenpakete über die lokale IP-Adresse einerseits und die erste IP-Tunnel-Adresse andererseits zugeordnet werden.

Gemäß Schritt 307 werden somit die Daten zwischen dem Server 2 und dem Mobilfunknetz 5 transparent durchgereicht.

Die Figur 4 zeigt die Fortsetzung der Signalisierung der Figur 3. Wenn gemäß Schritt 308 eine zweite gesicherte Datenverbindung durch den Nutzer bzw. das TK-Endgerät 1 (oder alternativ durch den Server 2) zwischen TK-Endgerät 1 und Server 2 aufgebaut wird (die Datenverbindung 81 der Figur 2), verbindet der Server 2 diese gesicherte Datenverbindung des Nutzers bzw. TK-Endgerätes 1 (der eine zweite IP-Tunnel-Adresse zugewiesen ist) mit der gesicherten Datenverbindung zum TK-Endgerät 3 bzw. der SIM-Karte 4. Hierzu nimmt der Server 2 ein Routen der Daten zwischen der ersten gesicherten Datenverbindung und der zweiten gesicherten Datenverbindung vor, wobei hierzu die Daten bzw. Datenpakete über die erste IP-Tunnel-Adresse einerseits und die zweite IP-Tunnel-Adresse andererseits zugeordnet werden. Somit entsteht gemäß Schritt 309 ein transparenter Datentunnel zwischen dem TK-Endgerät 1 und dem Mobilfunknetz 5 der betrachteten Region.

Der Server 2 kann die gesicherte Datenverbindung mit dem Mobilfunk-Gateway 3, die auf der Grundlage der Mobilfunk-Kommunikation der eingebuchten SIM-Karte 4 erfolgt, der gesicherten Datenverbindung mit dem TK-Endgerät 1 zuordnen, da es über die Zuordnung der SIM-Karte 4 zum TK-Endgerät 1 informiert ist.

Gemäß Schritt 310 kann der Datentunnel einen Zugang in das dahinter geschaltete Datennetz, im Allgemeinen das - regionale - Internet bereitstellen. Für das Mobilfunknetz 5 und das dahinter geschaltete Datennetz 7 verhält sich das TK-Endgerät 1 dabei so, als ob es sich lokal in der Region befindet, die durch das Mobilfunknetz 5 abgedeckt wird.

Es wird darauf hingewiesen, dass es sich bei den betrachteten Datenverbindungen um Verbindungen auf den Ebenen 1 bis 4 und gegebenenfalls auch noch der Ebene 5 des OSI-Referenzmodells handelt, die der Bereitstellung einer Konnektivität dienen. Diese Konnektivität ist die Voraussetzung für die Realisierung von Anwendungen und Diensten, die auf der Ebene 7 des OSI-Referenzmodells angesiedelt sind.

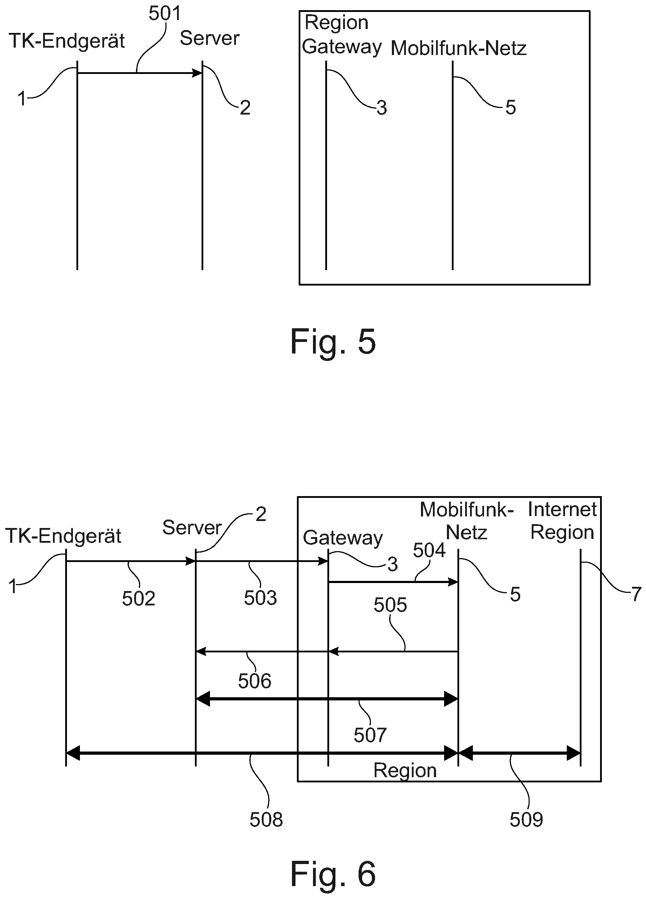

Die Figuren 5 und 6 zeigen gemäß einer zweiten Ausführungsvariante den Signalisierungsablauf zwischen TK-Endgerät 1, Server 2, Mobilfunk-Gateway 3 und Mobilfunknetz 5.

Wie bei der ersten Auslegungsvariante wird gemäß Schritt 501 zu irgendeinem Zeitpunkt dem TK-Endgerät 1 eine SIM-Karte zugeordnet. Die Zuordnung kann über den Nutzer des TK-Endgerätes 1, einen Administrator oder den Server 2 erfolgen. Die Zuordnung kann durch manuellen Befehl oder automatisiert erfolgen. Eine für den Schritt 301 erforderliche Datenverbindung zwischen dem TK-Endgerät 1 und dem Server 2 kann anschließend wieder aufgegeben werden. In jedem Fall ist der Server 2 über die Zuordnung zu informieren, sofern sie nicht durch ihn selbst erfolgt.

Wenn gemäß Schritt 502 der Nutzer bzw. das TK-Endgerät 1 eine gesicherte Datenverbindung (zum Beispiel VPN-Verbindung) zum Server 2 aufbaut, dann wird die dem TK-Endgerät 1 zugeordnete SIM-Karte bzw. werden die SIM-Informationsdaten gemäß Schritt 503 dem Mobilfunk-Gateway 3 bereitgestellt (durch den Server 2 oder einen SIM-Server 20) und es wird gemäß Schritt 504 das Mobilfunk-Gateway 3 unter Verwendung der zugewiesenen SIM-Karte im Mobilfunknetz 5 eingebucht. Bei dieser Ausführungsvariante wird somit zuerst eine gesicherte Datenverbindung zwischen dem TK-Endgerät und den Server 2 aufgebaut (die Datenverbindung 81 der Figur 2). Dieser gesicherten Datenverbindung wird eine (zweite) IP-Tunnel-Adresse zugeordnet.

Das weitere Verfahren verläuft entsprechend den Figuren 3 und 4. Sobald die SIM-Karte erfolgreich eingebucht wurde und eine Datenverbindung gemäß Schritt 505 durch das Mobilfunknetz 5 aufgebaut wurde (über eine lokale IP-Adresse des Mobilfunk-Gateways 3 und einen lokalen Zugang des Mobilfunk-Gateways 3 zum Mobilfunknetz 5), wird gemäß Schritt 506 eine weitere gesicherte Datenverbindung, zum Beispiel eine VPN-Verbindung, zwischen dem Mobilfunk-Gateway und dem Server 2 aufgebaut. Dieser gesicherten Datenverbindung wird eine (erste) IP-Tunnel-Adresse zugeordnet. Die Daten dieses Datenkanals werden dann gemäß Schritt 507 transparent zwischen Server 2 und Mobilfunknetz 5 ausgetauscht, wobei im Mobilfunk-Gateway ein Routen der Daten zwischen der gesicherten Datenverbindung zum Server 2 und der Mobilfunk-Datenverbindung ins Mobilfunknetz 5 erfolgt, wobei hierzu die Daten bzw. Datenpakete über die lokale IP-Adresse einerseits und die erste IP-Tunnel-Adresse andererseits zugeordnet werden.

Weiter ist vorgesehen, dass der Server 2 die gesicherte Datenverbindung zwischen Server 2 und Mobilfunk-Gateway 3 mit der in Schritt 502 aufgebauten gesicherten Datenverbindung zwischen dem TK-Endgerät 1 und den Server 2 verbindet. Hierzu nimmt der Server 2 ein Routen der Daten zwischen den beiden gesicherten Datenverbindungen vor, wobei hierzu die Daten bzw. Datenpakete über die erste IP-Tunnel-Adresse einerseits und die zweite IP-Tunnel-Adresse andererseits zugeordnet werden. Somit entsteht gemäß Schritt 508 ein transparenter Datentunnel zwischen dem TK-Endgerät 1 und dem Mobilfunknetz 5 der betrachteten Region. Gemäß Schritt 509 kann dieser Datentunnel einen Zugang in das dahinter geschaltete Datennetz, im Allgemeinen das - regionale - Internet 7 bereitstellen. Für das Mobilfunknetz 5 und das dahinter geschaltete Datennetz 7 verhält sich das TK-Endgerät 1 dabei so, als ob es sich lokal in der Region befindet, die durch das Mobilfunknetz 5 abgedeckt wird.

Nach der Bereitstellung einer Datenverbindung des TK-Endgerätes 1 zum Internet 7 gemäß dem Verfahren der Figuren 3 und 4 oder dem Verfahren der Figuren 5 und 6 ist eine Konnektivität des TK-Endgerätes 1 zum Internet 7 gegeben, auf deren Grundlage Telekommunikationsverbindungen (TK-Verbindungen) zwischen dem TK-Endgerät 1 und einem Kommunikationspartner, beispielsweise einem Server des Internet oder einem weiteren TK-Endgerät, zur Realisierung einer Anwendung bzw. eines Dienstes auf der Ebene 7 des OSI-Referenzmodells erfolgen können.

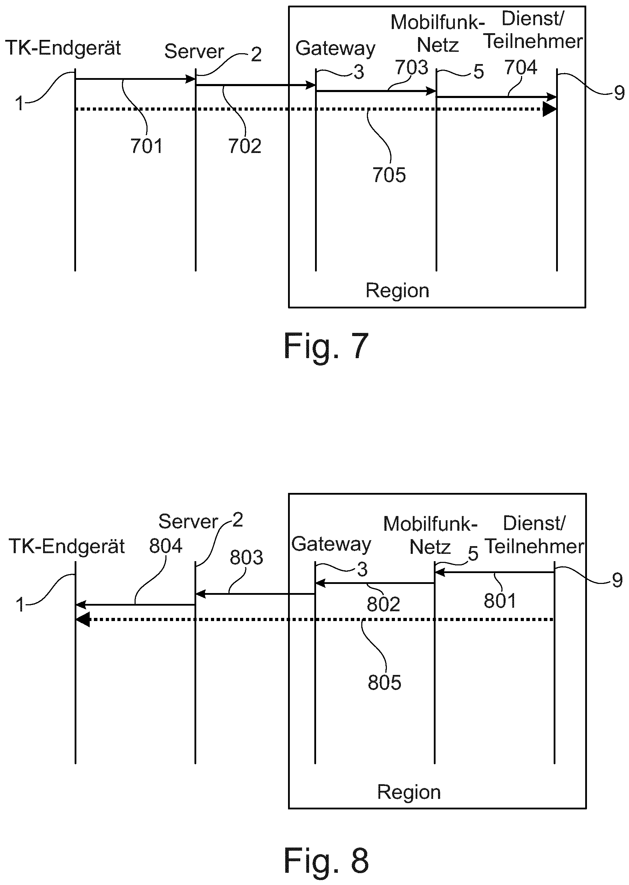

Die Figuren 7 und 8 zeigen hierzu exemplarisch die Realisierung eines Dienstes, mit dem eine SMS/MMS-Nachricht vom TK-Endgerät 1 ausgesandt bzw. empfangen wird. Gemäß der Figur 7 ist ausgehend von der Situation, dass dem TK-Endgerät 1 eine SIM-Karte zugeordnet ist, vorgesehen, dass der Nutzer bzw. das TK-Endgerät eine SMS/MMS-Nachricht zu einem regionalen Teilnehmer oder Diensteanbieter sendet. Dabei sendet das TK-Endgerät 1 die SMS/MMS-Nachricht unter Eingabe eines Empfängers gemäß Schritt 701 an den Server 2. Sofern es sich bei dem TK-Endgerät 1 nicht um ein Mobilfunk-Endgerät handelt, wird die SMS/MMS-Nachricht beispielsweise über eine Benutzeroberfläche auf dem Server 2 (zum Beispiel eine HTML Oberfläche) oder über eine andere Schnittstelle zur Verfügung gestellt. Der Server 2 die Nachricht gemäß Schritt 702 an das Mobilfunk-Gateway 3 weiter. Dieses versendet die SMS/MMS-Nachricht gemäß Schritt 703 über das Mobilfunknetz 5. Dieses versendet die Nachricht gemäß Schritt 704 über das Internet an einen Dienst oder Teilnehmer 9. Insgesamt wird somit ein Übertragungsweg 705 vom TK-Endgerät zum Dienst/Teilnehmer 9 bereitgestellt.

Gemäß der Figur 8 empfängt ein Nutzer bzw. dessen TK-Endgerät 1 eine SMS/MMS-Nachricht von einem regionalen Teilnehmer oder Diensteanbieter 9, beispielsweise bei einer 2-Wege-Autorisierung im Zusammenspiel mit einer Datenanwendung. Die Nachricht wird vom Dienst/Teilnehmer 9 über das Internet in das Mobilfunknetz 5 versandt und vom Mobilfunk-Gateway 3 empfangen (Schritte 801, 802). Der Mobilfunk-Gateway 3 leitet in Schritt 803 die empfangene SMS/MMS-Nachricht an den Server 2 weiter. Der Server 2 leitet die empfangene SMS/MMS-Nachricht gemäß Schritt 804 an das TK-Endgerät 1 weiter. Insgesamt wird somit ein Übertragungsweg 805 vom Dienst/Teilnehmer 9 zum TK-Endgerät 1 bereitgestellt.

Es versteht sich, dass die Erfindung nicht auf die oben beschriebenen Ausführungsformen beschränkt ist und verschiedene Modifikationen und Verbesserungen im Rahmen des Schutzumfangs der beiliegenden Ansprüche vorgenommen werden können, ohne von den hier beschriebenen Konzepten abzuweichen. Weiter wird darauf hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Verfahren zum Bereitstellen einer Datenverbindung zum Internet an einem Telekommunikations-Endgerät, TK-Endgerät, unter Verwendung eines Mobilfunknetzes (5, 51, 52), wobei das Verfahren umfasst:
- Zuordnen einer SIM-Karte (4) dem TK-Endgerät (1) und Erfassen dieser Zuordnung an einem Server (2);
- Bereitstellen der SIM-Karte (4) einem Mobilfunk-Gateway (3);
- Einbuchen eines Funkmoduls des Mobilfunk-Gateways (3) im Mobilfunknetz (5, 51, 52) unter Verwendung der bereitgestellten SIM-Karte (4);
- Aufbau einer Mobilfunk-Datenverbindung (83) durch das eingebuchte Funkmodul des Mobilfunk-Gateways (3) über das Mobilfunknetz (5, 51, 52) zum Internet (7);
- Aufbau einer ersten gesicherten Datenverbindung (82) zwischen dem Mobilfunk-Gateway (3) und dem Server (2), wobei Daten zwischen dem Internet (7) und dem Server (2) über die Mobilfunk-Datenverbindung (83) und die erste gesicherte Datenverbindung (82) transparent übertragbar sind;
- Aufbau einer zweiten gesicherten Datenverbindung (81) zwischen dem TK-Endgerät (1) und dem Server (2); und
- Verbinden der ersten gesicherten Datenverbindung (82) und der zweiten gesicherten Datenverbindung (81) durch den Server (2) zur Bereitstellung einer Datenverbindung des TK-Endgeräts (1) zum Internet über die zweite gesicherte Datenverbindung (81), die erste gesicherte Datenverbindung (82) und die Mobilfunk-Datenverbindung (83),
- wobei die SIM-Karte (4) dem Mobilfunk-Gateway (3) durch den Server (2) bereitgestellt wird, wobei der Server (2) ein SIM-Server ist, oder die SIM-Karte (4) dem Mobilfunk-Gateway (3) durch einen gesonderten SIM-Server (20) bereitgestellt wird, der mit dem Server (2) kommuniziert.

2. Verfahren nach Anspruch 1, **dadurch gekennzeichnet, dass** die zweite gesicherte Datenverbindung (81) zwischen dem TK-Endgerät (1) und dem Server (2) vor der ersten gesicherten Datenverbindung (82) zwischen dem Mobilfunk-Gateway (3) und dem Server (2) aufgebaut wird, wobei der Aufbau der zweiten gesicherten Datenverbindung (81) das Bereitstellen der SIM-Karte (4) beim Mobilfunk-Gateway (3) auslöst.

3. Verfahren nach Anspruch 1, **dadurch gekennzeichnet, dass** die erste gesicherte Datenverbindung (82) zwischen dem Mobilfunk-Gateway (3) und dem Server (2) vor der zweiten gesicherten Datenverbindung (81) zwischen dem TK-Endgerät (1) und dem Server (2) aufgebaut wird.

4. Verfahren nach einem der vorangehenden Ansprüche, **dadurch gekennzeichnet, dass** der Server (2) die erste gesicherte Datenverbindung (82) und die zweite gesicherte Datenverbindung (81) verbindet, indem er die beiden Verbindungen (81, 82) einander zuordnet, so dass Daten der einen Verbindung auf die andere Verbindung weitergeleitet werden können und umgekehrt.

5. Verfahren nach Anspruch 4, **dadurch gekennzeichnet, dass** der Server (2) die beiden Verbindungen (81, 82) einander zuordnet, indem er IP-Adressen, die der ersten gesicherten Datenverbindung (82) und der zweiten gesicherten Datenverbindung (81) jeweils zugeordnet sind, einander zuordnet.

6. Verfahren nach einem der vorangehenden Ansprüche, **dadurch gekennzeichnet, dass** die erste gesicherte Datenverbindung (82) und die zweite gesicherte Datenverbindung (81) jeweils eine VPN-Verbindung oder ein anderer Tunnel ist.

7. Verfahren nach einem der vorangehenden Ansprüche, **dadurch gekennzeichnet, dass** das TK-Endgerät (1) nach der Bereitstellung einer Datenverbindung des TK-Endgeräts (1) zum Internet eine Anwendung oder einen Dienst realisiert und hierzu eine Telekommunikationsverbindung, TK-Verbindung, zu einem Server des Internet (7) und/oder zu einem weiteren TK-Endgerät aufbaut.

8. Verfahren nach Anspruch 7, **dadurch gekennzeichnet, dass** über die TK-Verbindung eine SMS/MMS/Sprach-Nachricht zu dem Server des Internet (7) und/oder dem weiteren TK-Endgerät übertragen und/oder von diesem empfangen wird.

9. Verfahren nach einem der vorangehenden Ansprüche, **dadurch gekennzeichnet, dass** das Mobilfunknetz (5, 51, 52) ein Mobilfunknetz eines anderen Landes ist als des Landes, in dem das Heimat-Mobilfunknetz der SIM-Karte realisiert ist, wobei das Einbuchen eines Funkmoduls des Mobilfunk-Gateways (3) im Mobilfunknetz (5, 51, 52) unter Verwendung der bereitgestellten SIM-Karte (4) durch Roaming erfolgt.

10. Verfahren nach einem der Ansprüche 1 bis 8, **dadurch gekennzeichnet, dass** das Mobilfunknetz (5, 51, 52) das Heimat-Mobilfunknetz der SIM-Karte (4) ist.

11. Serversystem, das aufweist:
- Mittel, die dazu vorgesehen und ausgebildet sind, eine SIM-Karte (4) einem TK-Endgerät (1) zuzuordnen;
- einen SIM-Server, der dazu vorgesehen und ausgebildet sind, die dem TK-Endgerät (1) zugeordnete SIM-Karte (4) einem Mobilfunk-Gateway (3) bereitzustellen;
- Mittel, die dazu vorgesehen und ausgebildet sind, das Mobilfunk-Gateway (3) zu veranlassen, sich im Mobilfunknetz (5, 51, 52) unter Verwendung der erhaltenen SIM-Karte (4) einzubuchen und eine Mobilfunk-Datenverbindung (83) über das Mobilfunknetz (5, 51, 52) zum Internet (7) aufzubauen;
- Mittel, die dazu vorgesehen und ausgebildet sind, eine erste gesicherte Datenverbindung (82) zwischen einem Server (2) und dem Mobilfunk-Gateway (3) aufzubauen, wobei Daten zwischen dem Mobilfunknetz (5, 51, 52) und dem Server (2) über die Mobilfunk-Datenverbindung (83) und die erste gesicherte Datenverbindung (82) transparent übertragbar sind;
- Mittel, die dazu vorgesehen und ausgebildet sind, eine zweite gesicherte Datenverbindung (81) zwischen dem Server (2) und dem TK-Endgerät (1) aufzubauen;
- Mittel, die dazu vorgesehen und ausgebildet sind, die erste gesicherten Datenverbindung (82) und die zweite gesicherte Datenverbindung (81) zur Bereitstellung einer Datenverbindung des TK-Endgeräts (1) zum Internet über die zweite gesicherte Datenverbindung (81), die erste gesicherte Datenverbindung (82) und die Mobilfunk-Datenverbindung (83) zu verbinden,
- wobei entweder sämtliche Mittel des Server-Systems in dem Server (2) realisiert sind, wobei der Server (2) den SIM-Server umfasst, oder
- das Serversystem in mindestens zwei verschiedene physikalische oder virtuelle Server aufgeteilt ist, wobei das Serversystem den Server (2) und den SIM-Server (20) aufweist und der SIM-Server (20) mit dem Server (2) kommuniziert.

12. Serversystem nach Anspruch 11, **dadurch gekennzeichnet, dass** der Server (2) dazu vorgesehen und ausgebildet ist, die erste gesicherte Datenverbindung (82) und die zweite gesicherte Datenverbindung (81) zu verbinden, indem er die beiden Verbindungen (81, 82) einander zuordnet, so dass Daten der einen Verbindung auf die andere Verbindung weitergeleitet werden können und umgekehrt.

13. Serversystem nach Anspruch 12, **dadurch gekennzeichnet, dass** der Server (2) dazu vorgesehen und ausgebildet ist, die beiden Verbindungen (81, 82) einander zuzuordnen, indem er dazu vorgesehen und ausgebildet ist, IP-Adressen, die der ersten gesicherten Datenverbindung (82) und der zweiten gesicherten Datenverbindung (81) jeweils zugeordnet sind, einander zuzuordnen.

## Claims

1. Method for providing a data connection to the Internet on a telecommunication terminal, TC terminal, by using a mobile radio network (5, 51, 52), the method comprising:
- associating a SIM card (4) with the TC terminal (1) and recording this association on a server (2);
- delivering the SIM card (4) to a mobile radio gateway (3);
- registering a radio module of the mobile radio gateway (3) in the mobile radio network (5, 51, 52) by using the delivered SIM card (4);
- setting up a mobile radio data connection (83) by way of the registered radio module of the mobile radio gateway (3) via the mobile radio network (5, 51, 52) to the Internet (7);
- setting up a first secure data connection (82) between the mobile radio gateway (3) and the server (2), data being transparently transmissible between the Internet (7) and the server (2) via the mobile radio data connection (83) and the first secure data connection (82);
- setting up a second secure data connection (81) between the TC terminal (1) and the server (2); and
- connecting the first secure data connection (82) and the second secure data connection (81) by way of the server (2) to provide a data connection from the TC terminal (1) to the Internet via the second secure data connection (81), the first secure data connection (82) and the mobile radio data connection (83),
- the SIM card (4) being delivered to the mobile radio gateway (3) by way of the server (2), the server (2) being a SIM server, or the SIM card (4) being delivered to the mobile radio gateway (3) by way of a separate SIM server (20) that communicates with the server (2).

2. Method according to Claim 1, **characterized in that** the second secure data connection (81) between the TC terminal (1) and the server (2) is set up before the first secure data connection (82) between the mobile radio gateway (3) and the server (2), the setup of the second secure data connection (81) triggering the delivery of the SIM card (4) to the mobile radio gateway (3) .

3. Method according to Claim 1, **characterized in that** the first secure data connection (82) between the mobile radio gateway (3) and the server (2) is set up before the second secure data connection (81) between the TC terminal (1) and the server (2).

4. Method according to one of the preceding claims, **characterized in that** the server (2) connects the first secure data connection (82) and the second secure data connection (81) by associating the two connections (81, 82) with one another, with the result that data of one connection can be forwarded to the other connection, and vice versa.

5. Method according to Claim 4, **characterized in that** the server (2) associates the two connections (81, 82) with one another by associating IP addresses that are respectively associated with the first secure data connection (82) and the second secure data connection (81) with one another.

6. Method according to one of the preceding claims, **characterized in that** each of the first secure data connection (82) and the second secure data connection (81) is a VPN connection or another tunnel.

7. Method according to one of the preceding claims, **characterized in that**, after the provision of a data connection from the TC terminal (1) to the Internet, the TC terminal (1) implements an application or a service and accomplishes this by setting up a telecommunication connection, TC connection, to a server of the Internet (7) and/or to another TC terminal.

8. Method according to Claim 7, **characterized in that** the TC connection is used to transmit and/or receive an SMS/MMS/voice message to and/or from the server of the Internet (7) and/or the other TC terminal.

9. Method according to one of the preceding claims, **characterized in that** the mobile radio network (5, 51, 52) is a mobile radio network of a different country from the country in which the home mobile radio network of the SIM card is implemented, a radio module of the mobile radio gateway (3) being registered in the mobile radio network (5, 51, 52) by using the delivered SIM card (4) by way of roaming.

10. Method according to one of Claims 1 to 8, **characterized in that** the mobile radio network (5, 51, 52) is the home mobile radio network of the SIM card (4).

11. Server system comprising:
- means that are intended and designed to associate a SIM card (4) with a TC terminal (1);
- a SIM server that is intended and designed to deliver the SIM card (4) associated with the TC terminal (1) to a mobile radio gateway (3);
- means that are intended and designed to cause the mobile radio gateway (3) to register in the mobile radio network (5, 51, 52) by using the received SIM card (4) and to set up a mobile radio data connection (83) via the mobile radio network (5, 51, 52) to the Internet (7);
- means that are intended and designed to set up a first secure data connection (82) between a server (2) and the mobile radio gateway (3), data being transparently transmissible between the mobile radio network (5, 51, 52) and the server (2) via the mobile radio data connection (83) and the first secure data connection (82);
- means that are intended and designed to set up a second secure data connection (81) between the server (2) and the TC terminal (1);
- means that are intended and designed to connect the first secure data connection (82) and the second secure data connection (81) to provide a data connection from the TC terminal (1) to the Internet via the second secure data connection (81), the first secure data connection (82) and the mobile radio data connection (83),
- either all means of the server system being implemented in the server (2), the server (2) comprising the SIM server, or
- the server system being split into at least two different physical or virtual servers, the server system comprising the server (2) and the SIM server (20), and the SIM server (20) communicating with the server (2).

12. Server system according to Claim 11, **characterized in that** the server (2) is intended and designed to connect the first secure data connection (82) and the second secure data connection (81) by associating the two connections (81, 82) with one another, with the result that data of one connection can be forwarded to the other connection, and vice versa.

13. Server system according to Claim 12, **characterized in that** the server (2) is intended and designed to associate the two connections (81, 82) with one another by being intended and designed to associate IP addresses that are respectively associated with the first secure data connection (82) and the second secure data connection (81) with one another.

## Revendications

1. Procédé permettant de fournir une connexion de données à internet au niveau d'un terminal de télécommunication, terminal TK, en utilisant un réseau de téléphonie mobile (5, 51, 52), le procédé comprenant les étapes consistant à :
- associer une carte SIM (4) au terminal TK (1) et détecter cette association au niveau d'un serveur (2) ;
- fournir la carte SIM (4) à une passerelle de téléphonie mobile (3) ;
- enregistrer un module radio de la passerelle de téléphonie mobile (3) dans le réseau de téléphonie mobile (5, 51, 52) en utilisant la carte SIM (4) fournie ;
- établir une connexion de données de téléphonie mobile (83) à internet (7) par le module radio enregistré de la passerelle de téléphonie mobile (3) par l'intermédiaire du réseau de téléphonie mobile (5, 51, 52) ;
- établir une première connexion de données sécurisée (82) entre la passerelle de téléphonie mobile (3) et le serveur (2), dans lequel des données entre internet (7) et le serveur (2) peuvent être transmises de manière transparente par l'intermédiaire de la connexion de données de téléphonie mobile (83) et de la première connexion de données sécurisée (82) ;
- établir une deuxième connexion de données sécurisée (81) entre le terminal TK (1) et le serveur (2) ; et
- relier la première connexion de données sécurisée (82) et la deuxième connexion de données sécurisée (81) par le serveur (2) pour fournir une connexion de données du terminal TK (1) à internet par l'intermédiaire de la deuxième connexion de données sécurisée (81), de la première connexion de données sécurisée (82) et de la connexion de données de téléphonie mobile (83),
- dans lequel la carte SIM (4) est fournie à la passerelle de téléphonie mobile (3) par le serveur (2), le serveur (2) étant un serveur SIM, ou la carte SIM (4) est fournie à la passerelle de téléphonie mobile (3) par un serveur SIM à part (20) qui communique avec le serveur (2).

2. Procédé selon la revendication 1, **caractérisé en ce que** la deuxième connexion de données sécurisée (81) entre le terminal TK (1) et le serveur (2) est établie avant la première connexion de données sécurisée (82) entre la passerelle de téléphonie mobile (3) et le serveur (2), l'établissement de la deuxième connexion de données sécurisée (81) déclenchant la fourniture de la carte SIM (4) au niveau de la passerelle de téléphonie mobile (3).

3. Procédé selon la revendication 1, **caractérisé en ce que** la première connexion de données sécurisée (82) entre la passerelle de téléphonie mobile (3) et le serveur (2) est établie avant la deuxième connexion de données sécurisée (81) entre le terminal TK (1) et le serveur (2).

4. Procédé selon l'une quelconque des revendications précédentes, **caractérisé en ce que** le serveur (2) relie la première connexion de données sécurisée (82) et la deuxième connexion de données sécurisée (81) en associant les deux connexions (81, 82) l'une à l'autre de sorte que les données d'une connexion peuvent être retransmises à l'autre connexion, et inversement.

5. Procédé selon la revendication 4, **caractérisé en ce que** le serveur (2) associe les deux connexions (81, 82) l'une à l'autre en associant l'une à l'autre des adresses IP qui sont respectivement associées à la première connexion de données sécurisée (82) et à la deuxième connexion de données sécurisée (81).

6. Procédé selon l'une quelconque des revendications précédentes, **caractérisé en ce que** la première connexion de données sécurisée (82) et la deuxième connexion de données sécurisée (81) sont respectivement une connexion VPN ou un autre tunnel.

7. Procédé selon l'une quelconque des revendications précédentes, **caractérisé en ce qu'**après la fourniture d'une connexion de données du terminal TK (1) à internet, le terminal TK (1) réalise une application ou un service et établit à cet effet une connexion de télécommunication, connexion TK, avec un serveur sur internet (7) et/ou avec un autre terminal TK.

8. Procédé selon la revendication 7, **caractérisé en ce que** par l'intermédiaire de la connexion TK, un SMS/MMS/message vocal est transmis au serveur sur internet (7) et/ou au terminal TK supplémentaire et/ou est reçu par celui-ci.

9. Procédé selon l'une quelconque des revendications précédentes, **caractérisé en ce que** le réseau de téléphonie mobile (5, 51, 52) est un réseau de téléphonie mobile d'un autre pays que le pays dans lequel est réalisé le réseau de rattachement de téléphonie mobile de la carte SIM, dans lequel l'enregistrement d'un module radio de la passerelle de téléphonie mobile (3) dans le réseau de téléphonie mobile (5, 51, 52) est effectué par itinérance en utilisant la carte SIM (4) fournie.

10. Procédé selon l'une quelconque des revendications 1 à 8, **caractérisé en ce que** le réseau de téléphonie mobile (5, 51, 52) est le réseau de téléphonie mobile de rattachement de la carte SIM (4).

11. Système serveur, présentant :
- des moyens qui sont prévus et réalisés pour associer une carte SIM (4) à un terminal TK (1) ;
- un serveur SIM qui est prévu et réalisé pour fournir la carte SIM (4) associée au terminal TK (1) à une passerelle de téléphonie mobile (3) ;
- des moyens qui sont prévus et réalisés pour faire que la passerelle de téléphonie mobile (3) s'enregistre auprès du réseau de téléphonie mobile (5, 51, 52) en utilisant la carte SIM (4) reçue et pour établir une connexion de données de téléphonie mobile (83) à internet (7) par l'intermédiaire du réseau de téléphonie mobile (5, 51, 52) ;
- des moyens qui sont prévus et réalisés pour établir une première connexion de données sécurisée (82) entre un serveur (2) et la passerelle de téléphonie mobile (3), dans lequel des données peuvent être transmises de manière transparente entre le réseau de téléphonie mobile (5, 51, 52) et le serveur (2) par l'intermédiaire de la connexion de données de téléphonie mobile (83) et la première connexion de données sécurisée (82) ;
- des moyens qui sont prévus et réalisés pour établir une deuxième connexion de données sécurisée (81) entre le serveur (2) et le terminal TK (1) ;
- des moyens qui sont prévus et réalisés pour relier la première connexion de données sécurisée (82) et la deuxième connexion de données sécurisée (81) pour fournir une connexion de données du terminal TK (1) à internet par l'intermédiaire de la deuxième connexion de données sécurisée (81), de la première connexion de données sécurisée (82) et de la connexion de données de téléphonie mobile (83),
- dans lequel soit tous les moyens du système serveur sont réalisés dans le serveur (2), le serveur (2) comprenant le serveur SIM, soit
- le système serveur est réparti sur au moins deux serveurs physiques ou virtuels différents, dans lequel le système serveur présente le serveur (2) et le serveur SIM (20) et le serveur SIM (20) communique avec le serveur (2).

12. Système serveur selon la revendication 11, **caractérisé en ce que** le serveur (2) est prévu et réalisé pour relier la première connexion de données sécurisée (82) et la deuxième connexion de données sécurisée (81) en associant les deux connexions (81, 82) l'une à l'autre de sorte que les données d'une connexion peuvent être retransmises à l'autre connexion, et inversement.

13. Système serveur selon la revendication 12, **caractérisé en ce que** le serveur (2) est prévu et réalisé pour associer les deux connexions (81, 82) l'une à l'autre **en ce qu'**il est prévu et réalisé pour associer respectivement l'une à l'autre des adresses IP qui sont associées à la première connexion de données sécurisée (82) et à la deuxième connexion de données sécurisée (81).
